# EUROPÄISCHE PATENTANMELDUNG

(11) **EP 0 893 286 A1**
(43) Veröffentlichungstag der Anmeldung: **27.01.1999**
(21) Anmeldenummer: 98112873.9
(22) Anmeldetag: 10.07.1998
(51) Int. Cl.: B60D 1/02

(54) **Anhängekupplung**

(30) Priorität: 12.07.1997 DE 19729945
(71) Anmelder: SAME DEUTZ-FAHR S.P.A., 24047 Treviglio (Bergamo) (IT)
(72) Erfinder: Hellebrand, Ferdinand, 53757 Sankt Augustin-Niederpreis (DE); Nenno, Horst-Josef, 53909 Zülpich-Bürrenich (DE)
(74) Vertreter: Quinterno, Giuseppe

(57) **Zusammenfassung**

Die Erfindung betrifft eine Anhängekupplung für eine Zugmaschine, insbesondere Traktor, zum Ankuppeln von Anhängern, landwirtschaftlichen Wagen oder Geräten, die eine Kuppelöse aufweisen, wobei ein Kuppelbolzen eines an der Zugmaschine befestigbaren Kuppelmauls in die Kuppelöse mittels einer Betätigungsvorrichtung hinein- und hinausbewegbar ist.

Der Nachteil eines kostspieligen Auswechseln der kompletten Anhängekupplung (1a) zum bloßen Austausch des Kuppelbolzens (5a) wird dadurch vermieden, daß der Kuppelbolzen (5a) oder zumindest der Teil des Kuppelbolzens, der mit der Kuppelöse in Wirkverbindung steht, ohne Auswechseln der Anhängekupplung (1a) mit einfachen Mitteln ausbaubar ist.

## Beschreibung

Die Erfindung betrifft eine Anhängekupplung für eine Zugmaschine, insbesondere nach dem Oberbegriff des Anspruchs 1.

Traktoren benötigen u. a. auch eine Anhängekupplung zum Ankuppeln von Anhängern, landwirtschaftlichen Wagen oder Geräten, die eine Kuppelöse aufweisen, wobei ein Kuppelbolzen eines an der Zugmaschine befestigbaren Kuppelmauls in die Kuppelöse mittels einer Betätigungsvorrichtung hinein- und hinausbewegbar ist. Für unterschiedliche Arten und Einsatzzwecke werden Kuppelbolzen mit unterschiedlichen Durchmessern und formen vorgesehen. Zum Kuppeln von Anhängern, insbesondere zur Verwendung auf Straßen mit höheren Fahrgeschwindigkeiten, sind Kuppelbolzen vorteilhaft, die im Bereich der Kuppelöse faßförmig ausgebildet sind, einen maximalen Durchmesser von ca. 37 mm aufweisen und durch ihre obere und untere Durchmesserverringerung ein Verschwenken der Zuggabel bzw. der Kuppelöse zulassen.

Zum Ankuppeln von Geräten und Wagen zur Verwendung auf dem Feld, auf Feldwegen und dergl. werden Kuppelbolzen verwendet, die einen Durchmesser von ca. 31 mm haben und im Bereich der Kuppelöse im wesentlichen zylindrisch ausgebildet sind, wobei das vergrößerte Spiel zur Kuppelöse die für den Feldeinsatz erforderlichen größeren Bewegungen in verschiedene Richtungen erlaubt. Um für die verschiedenen Einsatzfälle den richtigen Kuppelbolzen zur Verfügung zu haben, wird die komplette Anhängekupplung gegen eine solche ausgetauscht, die mit dem gewünschten Kuppelbolzen ausgerüstet ist. Die mit diesem Verfahren verbundene Anschaffung mehrerer Anhängekupplungen ist kostspielig.

Der Erfindung liegt die Aufgabe zugrunde, eine Anhängekupplung für Zugmaschinen zu schaffen, die für unterschiedliche gezogene Wagen und Geräte optimal geeignet ist.

Die Aufgabe wird dadurch gelöst, daß der Kuppelbolzen oder zumindest der Teil des Kuppelbolzens, der mit der Kuppelöse in Wirkverbindung steht, ohne Auswechseln der Anhängekupplung mit einfachen Mitteln ausbaubar ist. Dies kann bei angebauter oder abmontierter Anhängekupplung geschehen, immer jedoch ohne Auswechseln derselben.

Dadurch, daß zum Ausbau des Kuppelbolzens dieser von der Betätigungsvorrichtung lösbar ist, können unterschiedliche Kuppelbolzen In ein und dieselbe Anhängekupplung eingebaut werden.

Wenn das Gehäuse der Betätigungsvorrichtung in Bewegungsrichtung des Kuppelbolzens eine verschließbare Öffnung aufweist, deren Durchmesser größer als der maximale Durchmesser des Kuppelbolzens ist, kann der von der Betätigungsvorrichtung gelöste Kuppelbolzen durch die verschließbare Öffnung entnommen und durch Hineinführen eines anderen Kuppelbolzens durch eben diese Öffnung ersetzt werden.

Eine Anhängekupplung, bei der das freie Ende des Kuppelbolzens in einer führungsbuchse des Kuppelmauls gelagert ist, bietet den Vorteil, daß der Kuppelbolzen nach Entfernen der Führungsbuchse und eines den Kuppelbolzen mit einem Teil der Betätigungsvorrichtung verbindenden Mitnehmerstifts nach unten ausbaubar ist, wobei der Mitnehmerstift durch verschließbare Öffnungen im Gehäuse der Betätigungsvorrichtung oder im Kuppelmaul zugänglich ist. Bei dieser Version wird der Kuppelbolzen nach unten aus- und eingebaut.

Beide Varianten der Anhängekupplung ermöglichen einen einfachen und kostensparenden Austausch des Kuppelbolzens, ohne dieselbe als Ganzes austauschen zu müssen.

Weitere Merkmale der Erfindung ergeben sich aus der nachfolgenden Beschreibung und der Zeichnung, In der Ausführungsbeispiele der Erfindung schematisch dargestellt sind.
Es zeigen:

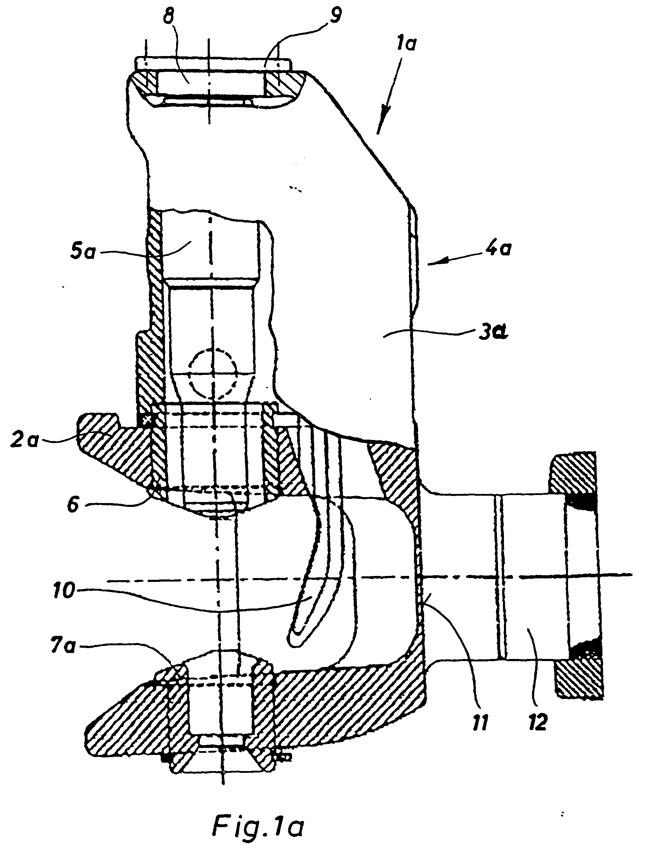

- Figur 1a:: Anhängekupplung, mit nach oben ausbaubarem Kuppelbolzen Im Teilschnitt;

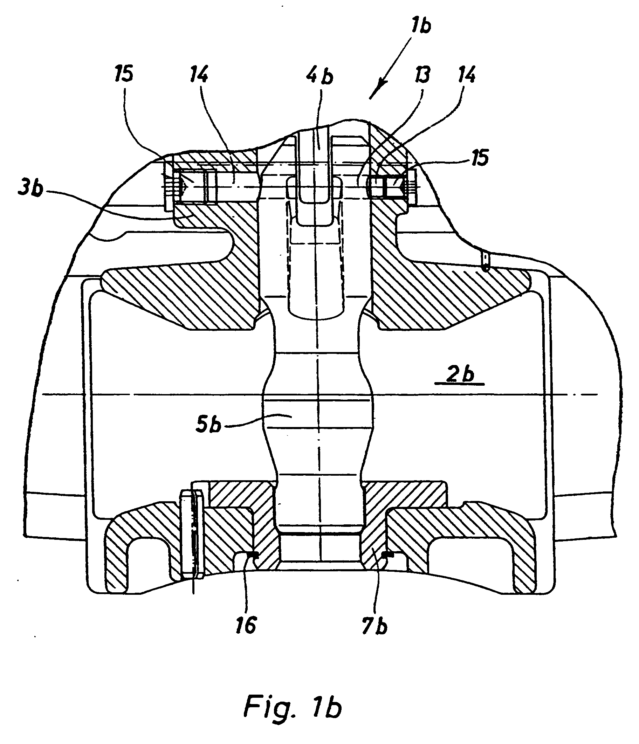

- Figur 1b:: Anhängekupplung, mit nach unten ausbaubarem Kuppelbolzen im Teilschnitt.

Figur 1a zeigt eine Anhängekupplung 1a mit einem Kuppelmaul 2a an das sich ein Gehäuse 3a anschließt. Im Gehäuse 3a ist eine nicht dargestellte Betätigungsvorrichtung für einen Kuppelbolzen 5a vorgesehen. Der Kuppelbolzen 5a ist in einer oberen Führungsbüchse 6 und einer unteren Führungsbüchse 7a des Kuppelmauls 2a geführt.

In Bewegungsrichtung des Kuppelbolzens 5a ist im Gehäuse 3a eine Öffnung 8 mit einem Deckel 9 vorgesehen, deren Durchmesser größer als der maximale Durchmesser des Kuppelbolzens 5a ist.

Im Kuppelmaul 2a befindet sich eine selbsttätige Auslösevorrichtung 10 für die Betätigungsvorrichtung 4a. An der Rückseite 11 des Kuppelmauls 2a ist ein Führungsstutzen 12 angeordnet, der in einem nicht dargestellten Führungsschlitten drehbar gelagert ist.

Figur 1b zeigt eine andere Anhängekupplung 1b, mit einem anderen Kuppelmaul 2b, an das sich ein anderes Gehäuse 3b anschließt. Im anderen Gehäuse 3b ist eine andere Betätigungsvorrichtung 4b für einen anderen Kuppelbolzen 5b angeordnet. Der andere Kuppelbolzen 5b ist im anderen Kuppelmaul 2b und in dessen anderer unterer Führungsbüchse 7b geführt und über einen Mitnehmerstift 13 mit der anderen Betätigungsvorrichtung 4b verbunden.

In Verschlußstellung des anderen Kuppelbolzens 5b fluchtet der Mitnehmerstift 13 mit Bohrungen 14 im anderen Gehäuse 3b, die durch Verschlußstopfen 15 verschließbar sind.

Das Auswechseln der Kuppelbolzen 5a, 5b geschieht folgendermaßen:
Bei der Anhängekupplung 1a wird die Betätigungsvorrichtung 4a über deren Öffnungsstellung hinaus betätigt, so daß oder Kuppelbolzen 5a von dieser gelöst ist. Er kann dann nach Entfernen des Deckels 9 durch die Öffnung 8 entnommen und durch einen alternativen Kuppelbolzen ersetzt werden. Dieser wird durch Zurückstellen der Betätigungsvorrichtung 4a in deren Öffnungsstellung wieder mit dieser verbunden.

Bei der anderen Anhängekupplung 1b wird die andere Betätigungsvorrichtung 4b mit dem anderen Kuppelbolzen 5b in Öffnungsstellung gebracht, so daß die andere untere Führungsbüchse 7b nach Entfernen eines Sprengringes 16 entnommen werden kann. Danach werden die andere Betätigungsvorrichtung 4b und der andere Kuppelbolzen 5b in Verschlußstellung gebracht. Dann kann der Mitnehmerstift 13 nach Entfernen der Verschlußstopfen 15 durch die Bohrungen 14 entfernt und der anderen Kuppelbolzen 5b nach unten entnommen werden. Ein alternativer Kuppelbolzen wird in umgekehrter Reihenfolge eingebaut.

Die Montagevorgänge können bei am Traktor angebauter oder bei von diesem gelöster Anhängekupplung ausgeführt werden. In beiden Fällen handelt es sich um ein- und dieselbe Anhängekupplung, bei der lediglich der Kuppelbolzen ausgetauscht ist.

## Patentansprüche

1. Anhängekupplung für eine Zugmaschine, Insbesondere Traktor, zum Ankuppeln von Anhängern, landwirtschaftlichen Wagen oder Geräten, die eine Kuppelöse aufweisen, wobei ein Kuppelbolzen eInes an der Zugmaschine befestigbaren Kuppelmauls in die Kuppelöse mittels einer Betätigungsvorrichtung hinein- und hinausbewegbar ist,
dadurch gekennzeichnet, daß der Kuppelbolzen (5a, 5b) oder zumindest der Teil des Kuppelbolzens (5a, 5b), der mit der Kuppelöse in Wirkverbindung steht, ohne Auswechseln der Anhängekupplung (1a, 1b) mit einfachen Mitteln aushaubar ist.

2. Anhängekupplung nach Anspruch 1,
dadurch gekennzeichnet, daß zum Ausbau des Kuppelbolzens (5a, 5b) dieser von der Betätigungsvorrichtung (4a, 4b) lösbar ist.

3. Anhängekupplung nach Anspruch 2,
dadurch gekennzeichnet, daß das Gehäuse (3a, 3b) der Betätigungsvorrichtung (4a, 4b) in Bewegungsrichtung des Kuppelbolzens (5a) eine verschließbare Öffnung (8) aufweist, deren Durchmesser größer als der maximale Durchmesser des Kuppelbolzens (5a) ist.

4. Anhängekupplung nach Anspruch 1, bei der das freie Ende des Kuppelbolzens In einer Führungsbüchse des Kuppelmauls gelagert ist,
dadurch gekennzeichnet, daß der Kuppelbolzen (5b) nach Entfernen der unteren Führungsbüchse (7a) und eines den Kuppelbolzen mit einem Teil der Betätigungsvorrichtung (4a) verbindenden Mitnehmerstifts (13) nach unten ausbaubar ist, wobei der Mitnehmerstift (13) durch verschließbare Bohrungen (14) im Gehäuse (3a) der Betätigungsvorrichtung (4a) oder im Kuppelmaul (2a) zugänglich ist.
